# EUROPÄISCHE PATENTSCHRIFT

(11) **EP 2 582 554 B1**
(45) Veröffentlichungstag und Bekanntmachung des Hinweises auf die Patenterteilung: **12.08.2015**
(21) Anmeldenummer: 11722809.8
(22) Anmeldetag: 01.06.2011
(51) Int. Cl.: B60R 25/00, B62D 15/02, B60W 30/06

(54) **VERFAHREN ZUR UNTERSTÜTZUNG EINES FAHRERS EINES KRAFTFAHRZEUGS**
METHOD FOR ASSISTING A DRIVER OF A MOTOR VEHICLE
PROCÉDÉ D'ASSISTANCE AU CONDUCTEUR D'UN VÉHICULE AUTOMOBILE

(30) Priorität: 17.06.2010 DE 102010030208
(43) Veröffentlichungstag der Anmeldung: 24.04.2013
(73) Patentinhaber: Robert Bosch GmbH, 70442 Stuttgart (DE)
(72) Erfinder: MUELLER, Martin, 70376 Stuttgart - Bad Cannstatt (DE); MIELENZ, Holger, 73760 Ostfildern (DE)
(86) Internationale Anmeldenummer: PCT/EP2011/059014
(87) Internationale Veröffentlichungsnummer: WO 2011/157556

(56) Entgegenhaltungen:
- EP-A1- 1 864 881
- EP-A2- 1 862 376
- WO-A1-2006/064544
- DE-A1-102007 009 745
- US-A1- 2008 009 990
- US-B1- 6 275 754

## Beschreibung

### Stand der Technik

Die Erfindung geht aus von einem Verfahren zur Unterstützung eines Fahrers eines Kraftfahrzeugs bei einem Fahrmanöver, umfassend zum Beispiel die Unterstützung des Fahrers zu notwendigen Lenkeinstellungen und zur Längsführung, um das Fahrmanövern durchzuführen. Fahrmanöver, bei denen der Fahrer unterstützt wird, sind zum Beispiel Einparkvorgänge, insbesondere Einparkvorgänge in Längsparklücken. Um die Verfahren durchzuführen, werden üblicherweise sogenannte Fahrassistenzsysteme eingesetzt. Um das Verfahren jeweils zu starten, wird dem Fahrer vom Fahrassistenzsystem ein Fährmanöver angeboten. Hierzu aktiviert der Fahrer das System zunächst und bekommt anschließend einen unterschiedlichen Grad an Unterstützung durch das System bezüglich der Längs- und Querführung angeboten, um das Fahrzeug zum Beispiel in eine vom Fahrer ausgewählte Parklücke abzustellen. Bei einfachen Systemen erhält der Fahrer lediglich Hinweise zum Abstand zu Objekten, die in der Umgebung des Fahrzeugs sind, um auf diese Weise Kollisionen mit diesen Objekten zu vermeiden. Weiter fortgeschrittene Systeme berechnen eine geeignete Einparkbahn, eine sogenannte Trajektorie, in eine Parklücke und geben dem Fahrer Lenkhinweise, um entlang der Trajektorie in die Parklücke einzuparken. Neben den Hinweisen für die Lenkführung ist es weiterhin auch bekannt, dass die Lenkung vom System übernommen wird und dem Fahrer nur noch die Längsführung obliegt, das heißt, er das Fahrzeug nur noch beschleunigen muss, bremsen muss oder die Geschwindigkeit halten muss. Weiterhin sind auch vollautomatische Systeme bekannt, bei denen der gesamte Einparkvorgang inklusive Längsführung durch das Fahrsystem durchgeführt wird.

Ein solches Fahrassistenzsystem, das den Fahrer beim Einparken unterstützt, ist zum Beispiel aus US-A 2004/0260439 bekannt.

Aus der US 6,275,754 B1 ist ein automatisches Lenksystem für ein Fahrzeug bekannt, bei dem vier verschiedene Parkmodi zur Verfügung stehen. Der Fahrer wählt einen passenden Parkmodus aus, wonach das automatische Lenksystem das Fahrzeug automatisiert in einen zur Verfügung stehenden Parkplatz fährt. Mögliche Hindernisse werden durch ein Umfelderfassungssystem erkannt und bei Kollision wird der Fahrer zunächst informiert und gegebenenfalls die Einparktrajektorie so verändert, dass keine Kollision mit dem Hindernis stattfindet.

Der nächstliegende Stand der Technik ist in der US6 275 754 B1 zu sehen. Nachteil der bekannten Systeme ist jedoch, dass diese im Allgemeinen nur eine Unterstützung bei Einparkvorgängen anbieten, eine Ausdehnung auf weitere Fahrmanöver im Niedergeschwindigkeitsbereich, zum Beispiel zum Manövrieren in Parkhäusern, ist nicht möglich. Dies ist insbesondere damit verbunden, dass bei weiteren Fahrmanövern im Niedergeschwindigkeitsbereich eine sehr große Anzahl an Möglichkeiten vorherrscht und komplexe Fahraufgaben bewerkstelligt werden müssen, bei denen die Visualisierung der Fahrmanöver für den Fahrer von hoher Bedeutung ist, damit die richtigen Entscheidungen getroffen werden können. Zudem bieten derzeitige Fahrassistenzsysteme nicht die Möglichkeit, dem System zum Beispiel über geeignete Schnittstellen die Fahrabsicht des Fahrers deutlich zu machen.

### Offenbarung der Erfindung

### Vorteile der Erfindung

Beim erfindungsgemäßen Verfahren zur Unterstützung eines Fahrers eines Kraftfahrzeugs bei einem Fahrmanöver werden dem Fahrer entweder von einem Fahrassistenzsystem Anweisungen zur Durchführung der notwendigen Lenkeinstellung und zur Längsführung gegeben oder die Lenkeinstellung und gegebenenfalls die Längsführung werden vom Fahrassistenzsystem automatisch durchgeführt. Von dem Fahrassistenzsystem werden Standardmanöver bereitgestellt, die bei einer möglichen Kollision mit einem Objekt während der Durchführung eines vom Fahrassistenzsystem geplanten Fahrmanövers oder auf Anforderung durch den Fahrer durchgeführt werden.

Eine erfindungsgemäße Vorrichtung zur Durchführung des Verfahrens umfasst Mittel zur Erfassung der Umgebung des Fahrzeugs sowie gegebenenfalls Mittel zur Lokalisierung des Fahrzeugs und ein Fahrassistenzsystem, wobei das Fahrassistenzsystem Mittel aufweist zum
a) Berechnen einer geeigneten Trajektorie in Abhängigkeit von erfassten Umfeldbedingungen für die Ausführung eines durch den Fahrer aktivierten beziehungsweise automatisch eingeleiteten Standardmanövers oder
b) Optimiert rückgängig machen einer zuvor gefahrenen Trajektorie, wobei weiterhin Mittel zur Speicherung vorgesehen sind, um eine zuvor gefahrene Trajektorie zu speichern.

Die Unterstützung des Fahrers erfolgt über Standardmanöver, die entweder automatisch durch das Fahrassistenzsystem eingeleitet werden können oder gezielt nach Aufforderung durch den Fahrer aktiviert werden. Die Unterstützung erfolgt über
a) Algorithmen, die in Abhängigkeit der sensierten Umfeldbedingungen adaptiv eine geeignete Trajektorie für die Ausführung des durch den Fahrer aktivierten bzw. automatisch eingeleiteten Standardmanövers berechnen, und
b) Algorithmen, die eine zuvor gefahrene Trajektorie in einem Speicher ablegen und weitere Umfeld- und Fahrzeuginformationen verwenden, um die abgespeicherte Trajektorie optimiert rückgängig zu machen.

Durch die Formulierung der Fahraufgaben eines Manövriervorganges über Standardmanöver, ist nur ein geringer Interaktionsbedarf mit dem Fahrer erforderlich, so dass die jeweiligen Manöver schnell initiiert werden können. Auch ist es nicht erforderlich, dass der Fahrer ein Display überwachen muss.

Ein weiterer Vorteil der Unterteilung der Fahraufgaben in Standardmanöver ist, dass hierdurch eine effiziente und intuitive Unterstützung des Fahrers in kritischen Manöversituationen zugänglich wird. Aufgrund des nur geringen Interaktionsbedarfs mit dem Fahrer ist weiterhin nur eine minimale Mensch-MaschineSchnittstelle (Human Machine Interface, HMI) notwendig, die nur wenige Eingabemittel, beispielsweise Tasten oder Knöpfe, aufweist. Eine Rückmeldung an den Fahrer kann zum Beispiel akustisch, beispielsweise durch eine Sprachausgabe, erfolgen. Neben einer akustischen Ausgabe ist es jedoch auch möglich, eine optische Ausgabe vorzusehen. Auch eine Kombination aus akustischer und optischer Ausgabe ist möglich. Eine weitere Ausführungsform bedient sich insbesondere der haptischen Rückmeldung, indem Informationen über den einzuschlagenden Lenkwinkel mittels eines übersteuerbaren Lenkmoments vermittelt werden.

Durch die Umsetzung der Fahraufgabe über Standardmanöver ist es möglich, dass vom Fahrer standardisierte Fahrmanöver aktiviert werden, die dann vom Fahrzeug vollautomatisch oder teilautomatisch ausgeführt werden. Insbesondere kann bei der Auslegung darauf geachtet werden, dass der Fahrer stets in der Verantwortung bleibt.

Geeignete Standardmanöver, die dem Fahrer zur intuitiven Bedienung und einfachen Beherrschung einer komplexen Manövrieraufgabe angeboten werden sind zum Beispiel Abbiegen, Ausrichten parallel zu einem Objekt, Wenden, Parken oder Fahren entlang einer seitlich begrenzten Fahrbahn und Rückgängigmachen des zuletzt zurückgelegten Fahrweges.

Das Abbiegen umfasst üblicherweise Linksabbiegen und Rechtsabbiegen und ist im Allgemeinen eine Ausrichtungsänderung um ungefähr 90°. Ungefähr 90° schließt hierbei Winkel von 80° bis 100° ein. Es kann aber auch eine Ausrichtungsänderung um jeden beliebigen anderen Winkel sein, der zum Beispiel vom Fahrer des Fahrzeugs vorgegeben werden kann. Vorteilhafterweise wird das Manöver Linksabbiegen bzw. Rechtsabbiegen durchgeführt, wenn sich aufgrund der Erfassung des direkten Umfelds des Fahrzeugs innerhalb von einer vorgegebenen Wegstrecke die Möglichkeit bietet, die Ausrichtung des Fahrzeugs um den vorgegebenen Winkel, beispielsweise 90°, zu ändern. Dies ist zum Beispiel in Einparksituationen, Ausparksituationen und für Rangiermanöver, beispielsweise in Parkhäusern, hilfreich. Durch die Standardmanöver "Linksabbiegen" oder "Rechtsabbiegen" kann das Fahrzeug zum Beispiel vorwärts in einen Querparkplatz eingeparkt werden. Auch kann Unterstützung gegeben werden beim Befahren enger Fahrwege, wie sie beispielsweise in Parkhäusern auftreten.

In einer Ausführungsform ist es zum Beispiel möglich, wenn als Standardmanöver "Abbiegen" gewählt wird, dass automatisch ein Abbiegen nach rechts eingestellt wird. Sollte der Fahrer ein Abbiegen nach links wünschen, so ist es zum Beispiel möglich, dies durch eine zusätzliche Eingabe, beispielsweise durch Betätigen des Fahrtrichtungsanzeigers anzuzeigen. Weiterhin ist es auch möglich, das Fahrmanöver nicht nur beim Vorwärtsfahren, sondern auch beim Rückwärtsfahren durchzuführen. So wird zum Beispiel eine Trajektorie zum Abbiegen hinter dem Fahrzeug berechnet, wenn der Rückwärtsgang des Fahrzeugs eingelegt ist. Dies bietet dem Fahrer zum Beispiel Unterstützung beim Ausparken von einem Querparkplatz, auf dem das Fahrzeug vorwärts eingeparkt ist.

Das Standardmanöver "Ausrichten parallel zu einem Objekt" kann zum Beispiel genutzt werden, um an einen Automaten oder einen sogenannten Drive-in-Schalter heranzufahren. Durch das Standardfahrmanöver wird das Fahrzeug möglichst dicht an das Objekt bewegt, so dass die notwendigen Aktionen vom Fahrer auf einfache Weise durchgeführt werden können, beispielsweise das Anfordern eines Parkscheins. Alternativ ist es auch möglich, zum Beispiel über eine geeignete Eingabe, den Abstand einzustellen, der zu dem Objekt eingehalten werden soll. Auf diese Weise ist es zum Beispiel auch möglich, geradeaus in eine Parklücke einzufahren und einen ausreichend großen Abstand zu einem Objekt zu halten, so dass ein Aussteigen ermöglicht wird.

Das Standardmanöver "Fahren entlang einer seitlich begrenzten Fahrbahn" kann zum Beispiel genutzt werden, um in einem Parkhaus Parkreihen abzufahren. Hierdurch wird dem Fahrer des Fahrzeugs zum Beispiel die Suche nach einem Parkplatz erleichtert, da die Führung des Fahrzeugs durch das Fahrassistenzsystem übernommen wird und der Fahrer so eine größere Aufmerksamkeit der Suche nach einem Parkplatz widmen kann. Alternativ ist es auch möglich, dass das System gleichzeitig über geeignete Abstandssensoren abtastet, ob das Fahrzeug beim Abfahren der Parkreihen an einem freien Parkplatz vorbeifährt. Dieser kann dann zum Beispiel den Fahrer angeboten werden. Neben der Suche nach einem freien Parkplatz unterstützt das Standardmanöver "Fahren entlang einer seitlich begrenzten Fahrbahn" den Fahrer zum Beispiel auch beim Fahren in einem Parkhaus auf dem Weg zur Ausfahrt oder auch in engen Gassen. Wenn das Standardmanöver "Fahren entlang einer seitlich begrenzten Fahrbahn" gewählt wird, so bewegt sich das Fahrzeug zum Beispiel entlang einer Fahrzeugreihe oder entlang von Linienmarkierungen. Wenn eine Sackgasse oder das Ende einer Strecke bei gerader Ausfahrt erkannt wird, ist es weiterhin auch möglich, dass das Fahrzeug um eine Kurve fährt. Bei einer T-Kreuzung ist es hier zum Beispiel möglich, dass der Fahrer beispielsweise durch Betätigen des Fahrtrichtungsanzeigers vorgibt, in welche Richtung das Fahrzeug abbiegen soll.

Das Standardmanöver "Wenden" wird zum Beispiel dann durchgeführt, wenn ausreichend Platz zu einem Wendemanöver vorliegt. Das Wenden kann dabei in einem, drei oder mehreren Zügen erfolgen. Die Anzahl der Züge, die für das Wendemanöver benötigt werden, sind dabei vom vorhandenen Platz abhängig. Wenden im Rahmen der vorliegenden Erfindung bedeutet, dass die Ausrichtung des Fahrzeuges um im Wesentlichen 180° geändert wird, d.h. dass das Fahrzeug nach dem Wendemanöver in die gleiche Richtung zurückfahren kann, aus der es zuvor gekommen ist.

Das Standardmanöver "Rückgängigmachen des zuletzt zurückgelegten Fahrweges" kann zum Beispiel genutzt werden, um einen bereits ausgeführten Einparkvorgang wiederholen zu lassen, um dabei zum Beispiel die Endposition des Fahrzeugs zu korrigieren. So kann zum Beispiel der Abstand zu einem eventuell vorhandenen Bordstein verkleinert werden öder auch der Abstand zu einem neben dem Fahrzeug befindlichen Objekt vergrößert werden, um so ein komfortableres Ein- bzw. Aussteigen zu ermöglichen. Auch ist es zum Beispiel möglich, das Standardmanöver "Rückgängigmachen des zuletzt zurückgelegten Fahrweges" zu nutzen, um ein eingeparktes Fahrzeug aus einer Parklücke zu manövrieren.

Das Standardmanöver "Rückgängigmachen des zuletzt zurückgelegten Fahrweges" kann entweder das Rückgängigmachen des gesamten Rangiermanövers umfassen oder auch nur von einzelnen Teilschritten. So ist es zum Beispiel möglich, dass auch nur der zuletzt zurückgelegte Weg wieder rückgängig gemacht wird. Dies kann zum Beispiel hilfreich sein, um eine Kollision zu vermeiden. In diesem Fall wird zum Beispiel durch das Fahrassistenzsystem erkannt, dass eine Kollision mit einem Objekt droht, das Fahrzeug wird automatisch angehalten und der zuletzt zurückgelegte Weg wird wieder rückgängig gemacht. Auf diese Weise ist es zum Beispiel möglich, das Fahrzeug aus dem Gefahrenbereich zu bewegen. Insbesondere wird bei einer weiteren Ausführungsform Umfeldsensorik eingesetzt, die ein sicheres Verlassen des Gefahrenbereichs ermöglicht. Das Standardmanöver "Rückgängigmachen des zuletzt zurückgelegten Fahrweges" kann im Fall einer drohenden Kollision automatisch gestartet werden. Alternativ ist es auch möglich, dass der Fahrer bei der Überwachung der Umgebung des Fahrzeuges feststellt, dass eine Kollision droht, und das Manöver selbsttätig einleitet.

Ungeachtet der Ausführungsform kann das Standardmanöver "Rückgängigmachen des zuletzt zurückgelegten Fahrweges" zum Beispiel durch Betätigen eines geeigneten Schalters, beispielsweise einer "Undo"-Taste, eingeleitet werden. Insbesondere für die Rückgängigmachung einer verfahrenen Situation kann durch eine erste Betätigung der "Undo"-Taste, die Aufzeichnung gestartet und durch eine weitere Betätigung die Rückgängigmachung eingeleitet werden. Weiterhin ist eine Unterbrechung dieses Prozesses durch den Fahrer jederzeit möglich.

Das Rückgängigmachen des zuletzt zurückgelegten Fahrweges ist auch dann hilfreich, wenn das Fahrzeug in eine für weitere Fahrmanövern ungeschickte Position manövriert worden ist. In diesem Fall kann das Fahrmanöver rückgängig gemacht werden und ein neuer Versuch gestartet werden.

Insbesondere wenn das Rückgängigmachen des zuletzt zurückgelegten Fahrweges genutzt wird, um ein Fahrzeug aus einer Parklücke auszuparken oder eine komfortablere Endposition zu finden, umfasst der zuletzt zurückgelegte Fahrweg einen oder mehrere Rangierzüge zum Einparken in eine Parklücke.

Der zuletzt zurückgelegte Fahrweg kann sowohl eine vom Fahrer des Fahrzeugs ohne Unterstützung gefahrene Bahn sein als auch eine vom Fahrassistenzsystem geplante Bahn. Wenn die Bahn ohne Unterstützung durch ein Fahrassistenzsystem zurückgelegt wird, ist es zum Beispiel möglich, jeweils die zuletzt vom Fahrer durchgeführten Aktionen und damit die entsprechende Bahn in einen Speicher abzulegen, um dem Fahrassistenzsystem zu ermöglichen, den zuletzt zurückgelegten Weg wieder rückgängig machen zu können.

Durch die Beschreibung der Fahraufgabe als Standardmanöver und die adaptive, algorithmische Ermittlung möglicher Standardmanöver-Trajektorien aus Umfelddaten oder das Ablegen gefahrener Trajektorien im Speicher des Fahrassistenzsystems ist es auf einfache Weise möglich, ein jeweiliges Standardmanöver auszuwählen. Die Anforderung des Fahrers, ein Standardmanöver durchzuführen, kann zum Beispiel über ein geeignetes Eingabeelement gegeben werden. Als Eingabeelement eignen sich zum Beispiel Schalter oder Tasten. Wenn mehrere Standardmanöver abgelegt sind, kann zum Beispiel auch ein Tastenfeld vorgesehen sein, bei dem jede Taste mit einem bestimmten Standardmanöver verbunden ist. Beispielsweise kann ein solches Tastenfeld die Richtungsinformationen beinhalten, so dass das Fahrerassistenzsystem in der durch den Fahrer ausgewählten Richtung (vorne, hinten, rechts, links) das nächste, auf Basis der Umfelddaten abgeleitete, mögliche Standardmanöver, beispielsweise Abbiegen oder Einparken, ausführt.

Um das Fahrzeug bei der Durchführung eines Standardmanövers jeweils rechtzeitig anhalten zu können, falls eine Kollision mit einem Objekt droht, oder dem Fahrer ausreichend Zeit für die Auswahl des nächsten Standardmanövers einzuräumen und damit einen kontinuierlichen Systemablauf zu ermöglichen, werden die Standardmanöver nur im Niedergeschwindigkeitsbereich durchgeführt. Das bedeutet, dass das Kraftfahrzeug erfindungsgemäß eine maximale Geschwindigkeit von 30 km/h aufweisen darf, um ein Standardmanöver aktivieren zu können. Die maximal zulässige Geschwindigkeit, in der das System aktivierbar ist, hängt dabei erfindungsgemäß stark von der verwendeten Umfeldsensorik und dem daraus resultierenden Sichtfeld des Fahrerassistenzsystems ab. Wichtige Parameter hierbei sind, eine möglichst große Reichweite sicherzustellen, um hohe Geschwindigkeiten beherrschen zu können und einen großen Öffnungswinkel zu besitzen, um bei häufigen Abbiegeszenarien den lateralen Fahrbahnbereich einsehen zu können. Zur Absicherung können auch weitere Lokalisierungswerkzeuge, beispielsweise GPS-Informationen, eingesetzt werden, um eine Ausführung auf nicht systemrelevanten Fahrbahnen zu vermeiden. Nicht systemrelevante Fahrbahnen sind alle Fahrbahnen, auf denen die Standardmanöver nicht durchgeführt werden sollen, dies sind insbesondere Vorfahrtstraßen, Land- und Bundesstraßen sowie Autobahnen.

Weiterhin ist es vorteilhaft, wenn der Fahrer ein Standardmanöver wählt, das nur dann ausgeführt wird, wenn das Standardmanöver innerhalb einer vorgegebenen Wegstrecke oder einer vorgegebenen Zeit durchgeführt werden kann. So ist es zum Beispiel möglich, ein Standardmanöver nur dann durchzuführen, wenn dieses innerhalb der nächsten 10 Meter oder innerhalb der nächsten 10 Sekunden gestartet werden kann. Es kann aber auch jede beliebige andere Streckenlänge oder Zeit vorgegeben werden. Diese Faktoren werden über die jeweilige Systemkomponenten parametriert wobei darauf geachtet wird, dass ein kontinuierliche Unterstützung des Fahrers möglich wird und die Systemwirkung für ihn verständlich bleibt.

Um dem Fahrer eine hinreichende Unterstützung bei der Durchführung des Standardmanövers zu geben und zu vermeiden, dass das Fahrzeug bei der semiautomatischen oder selbsttätigen Durchführung eines Standardmanövers mit einem Objekt kollidiert, ist es weiterhin vorteilhaft, während der Durchführung des Standardmanövers die Umgebung des Fahrzeugs mit Abstandssensoren zu erfassen. Wenn mit den Abstandssensoren ein Objekt detektiert wird, kann rechtzeitig eine Bremsung eingeleitet werden oder aber eine Neuberechnung erfolgen, um eine Kollision mit dem Objekt zu vermeiden. Als Abstandssensoren können beliebige, dem Fachmann bekannte Abstandssensoren eingesetzt werden. Üblicherweise verwendete Abstandssensoren sind zum Beispiel Ultraschallsensoren, Radarsensoren, Infrarotsensoren oder LIDAR-Sensoren.

Als Mittel zur Lokalisierung können zum Beispiel GPS-Informationen oder Karten eingesetzt werden.

Wenn mit den Abstandssensoren eine Annäherung an ein Objekt detektiert wird, ist es vorteilhaft, wenn das Fahrzeug automatisch angehalten wird, wenn erkannt wird, dass die Annäherung bei Fortsetzung des Standardmanövers zu einer Kollision mit dem Objekt führen kann.

In einer Ausführungsform der Erfindung ist es möglich, dass das Standardmanöver, insbesondere das "Rückgängigmachen des zuletzt zurückgelegten Fahrweges", durch eine Aktion des Fahrers beendet werden kann. Eine Aktion des Fahrers, mit der das Standardmanöver beendet werden kann, ist zum Beispiel das Betätigen der Bremse oder das Ausführen einer Lenkbewegung. Der Abbruch des Standardmanövers durch den Fahrer ist insbesondere dann von Vorteil, wenn eine Kollision droht, die vom System nicht erfasst wird. In diesem Fall ist es möglich, dass durch den Fahrer das Fahrzeug noch rechtzeitig zum Stillstand gebracht werden kann.

Neben dem Betätigen der Bremse und damit dem Anhalten des Fahrzeugs oder zusätzlich zum Betätigen der Bremse kann auch ein Gangwechsel die Aktion des Fahrers sein, durch die das Standardmanöver beendet werden kann.

Wenn das Standardmanöver, insbesondere das "Rückgängigmachen des zuletzt zurückgelegten Fahrweges", nicht durch den Fahrer beendet wird, ist es bevorzugt, dass dieses Manöver beendet wird, sobald das Fahrzeug eine vorgegebene maximale Distanz zurückgelegt hat, die Ausrichtung um einen vorgegebenen Winkel geändert hat oder die ursprüngliche Ausrichtung vor Beginn des vom Fahrassistenzsystem geplanten Fahrmanövers wieder eingenommen wurde. Die Situation, zu der das Manöver beendet werden soll, kann zum Beispiel durch den Fahrer über geeignete Eingabemittel vorgegeben werden, algorithmisch auf Basis von Umfelddaten ermittelt oder im Speicher des Fahrassistenzsystems abgelegt sein.

### Kurze Beschreibung der Figuren

Ausführungsbeispiele der Erfindung sind in den Figuren dargestellt und werden in der nachfolgenden Beschreibung näher erläutert.

Es zeigen:
- Figur 1: eine Ausparktrajektorie aus einem Querparkplatz,
- Figur 2: eine schematische Darstellung für ein Rückgängigmachen eines Fahrmanövers bei drohender Kollision mit einem herannahenden Fahrzeug,
- Figur 3: ein Einparkmanöver in einen Querparkplatz,
- Figur 4: ein Einparkmanöver in eine Längsparklücke,
- Figur 5: Anpassen einer Trajektorie an eine veränderte Umgebung,
- Figur 6: Rückgängigmachen eines missglückten Rangiervorgangs,
- Figur 7: ein Tastenfeld zur Auswahl eines Standardmanövers.

Ausführungsbeispiele der Erfindung

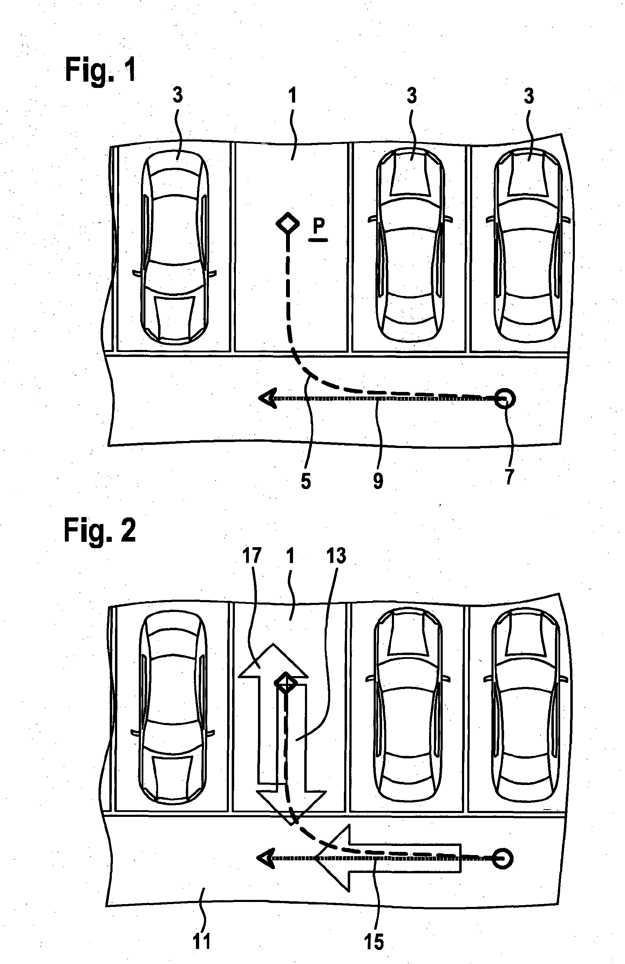

In Figur 1 ist eine Ausparktrajektorie aus einem Querparkplatz dargestellt.

Ein Querparkplatz 1 befindet sich im Allgemeinen in einer Reihe mehrerer parallel geparkter Fahrzeuge 3. Der Querparkplatz 1 wird somit beidseitig durch parallel parkende Fahrzeuge 3 begrenzt. Ein auf einem Querparkplatz 1 stehendes Fahrzeug kann diesen zum Beispiel mit einem einfachen Fahrzug in einem Zug befahren haben, insbesondere wenn das Fahrzeug vorwärts auf dem Querparkplatz steht. Um das Fahrzeug vom Querparkplatz 1 auszuparken, ist es dann möglich, die genutzte Einparktrajektorie rückgängig zu machen. Dies lässt sich zum Beispiel durch ein Standardmanöver durchführen. Alternativ ist es auch möglich, um das Fahrzeug vom Querparkplatz 1 auszuparken, als Standardmanöver ein Linksabbiegen oder ein Rechtsabbiegen vorzusehen, je nachdem in welche Richtung das Fahrzeug anschließend fahren soll. In Figur 1 ist zum Beispiel eine Trajektorie 5 für ein Rechtsabbiegen aus dem Querparkplatz 1 dargestellt. Um vom Querparkplatz 1 auszuparken, wird das Fahrzeug entlang der Trajektorie 5 bewegt, bis das Fahrzeug um 90° gedreht ist. Am Endpunkt 7 der Trajektore 5 ist die Drehung um 90° erreicht. Wenn das Fahrzeug vorwärts auf dem Querparkplatz 2 parkt, wird die Trajektorie 5 rückwärts durchfahren, sollte das Fahrzeug rückwärts in den Querparkplatz 1 eingeparkt sein, wird die Trajektorie vorwärts durchfahren. Bei der in Figur 1 dargestellten Ausführungsform ist die Trajektorie für ein vorwärts eingeparktes Fahrzeug dargestellt. Am Erreichen des Endpunktes 7 kann dann die Richtung geändert werden und das Fahrzeug entlang dem punktierten Pfeil 9 vorwärts quer zu den geparkten Fahrzeugen 3 bewegt werden.

Um das Fahrzeug vom Querparkplatz 1 entlang der Trajektorie 5 zu bewegen, ist es zum Beispiel möglich, dass vom Fahrer vorgegeben wird, das Standardmanöver "Rechtsabbiegen" durchzuführen. Damit das Fahrzeug sich rückwärts bewegt, sollte gleichzeitig der Rückwärtsgang eingelegt werden. Alternativ wäre es auch möglich, auszuparken, indem das Standardmanöver "Rückgängigmachen des zuletzt zurückgelegten Fahrweges" durchgeführt wird. Der zuletzt zurückgelegte Fahrweg kann dabei zum Beispiel vom Fahrer des Fahrzeugs vorgenommen worden sein oder alternativ vom Fahrassistenzsystem geplant und durchgeführt worden sein.

In Figur 2 ist ein Rückgängigmachen eines Fahrmanövers bei drohender Kollision schematisch dargestellt.

Bei dem in Figur 2 dargestellten Standardmanöver ist ebenfalls vorgesehen, ein Fahrzeug aus einem Querparkplatz 1 auszuparken.

Um das Fahrzeug vom Querparkplatz 1 auszuparken, bewegt sich dieses zunächst in Richtung einer quer zu den Parkplätzen verlaufenden Fahrbahn 11. Diese Bewegung ist durch einen Pfeil 13 dargestellt. Auf der Fahrbahn 11 können sich Fahrzeuge quer zu den Querparkplätzen 1 bewegen. Wenn das auf dem Querparkplatz 1 parkende Fahrzeug beginnt auszuparken, besteht somit die Gefahr einer Kollision mit einem sich auf der Fahrbahn 11 bewegenden Fahrzeug. Das sich auf der Fahrbahn 11 bewegende Fahrzeug ist durch einen Pfeil 15 dargestellt. Wenn der Ausparkvorgang des auf dem Querparkplatz 1 parkenden Fahrzeugs fortgesetzt wird, führt dies somit zu einer Kollision mit dem sich auf der Fahrbahn 11 bewegenden Fahrzeug.

Um eine solche Kollision zu vermeiden, ist es vorgesehen, das zuletzt zurückgelegte Fahrmanöver rückgängig zu machen. Das Rückgängigmachen ist durch einen Pfeil 17 dargestellt. Durch, das Rückgängigmachen des letzten Fahrzuges wird das Fahrzeug wieder auf den Querparkplatz 1 in die ursprüngliche Parksituation bewegt. Auf diese Weise kann eine Kollision mit einem sich quer zum Querparkplatz 1 bewegenden Fahrzeug vermieden werden. Das Rückgängigmachen des letzten Fahrzuges kann zum Beispiel vom Fahrer initialisiert werden, wenn dieser sieht, dass während des Ausparkens eine Kollision mit einem Fahrzeug droht. Alternativ ist es auch möglich, dass mit geeigneten Sensoren die Umgebung des Fahrzeugs abgetastet wird und durch die Abtastung der Umgebung erfasst wird, dass sich ein Objekt, beispielsweise ein Fahrzeug, nähert und eine Fortsetzung des durchgeführten Fahrmanövers zu einer Kollision mit dem sich nähernden Objekt führt. In diesem Fall kann das Rückgängigmachen des letzten Fahrzuges automatisch in die Wege geleitet werden. Durch das Automatisieren des Rückgängigmachens des letzten Fahrzuges ist es möglich, eine schnellere Reaktion herbeizuführen als durch den Fahrer, so dass auf diese Weise eine Kollision vermieden werden kann. Sollte eine Kollision nicht mehr vermieden werden können, so wird durch das Fahrmanöver jedoch die Folge der Kollision vermindert.

Wenn sich zeigt, dass ein Rückgängigmachen des letzten Fahrzuges, wie es hier durch Pfeil 17 dargestellt ist, nicht möglich ist, da sich beispielsweise ein bewegtes Objekt, beispielsweise ein Fußgänger, auf den Querparkplatz 1 bewegt hat, so wird das Fahrzeug vorzugsweise angehalten. Auf diese Weise lassen sich gegebenenfalls Kollisionen sowohl mit dem sich quer nähernden Fahrzeug als auch mit dem weiteren Objekt, beispielsweise einem Fußgänger vermeiden.

Die Erfassung der Umgebung des Fahrzeugs kann durch geeignete Sensoren, beispielsweise Abstandssensoren, erfolgen. Als Sensoren eignen sich, wie vorstehend bereits erwähnt, zum Beispiel Ultraschallsensoren, Infrarotsensoren, kapazitive Sensoren, Radarsensoren oder LIDAR-Sensoren.

Die Beendigung des Rückgängigmachens des Fahrzuges erfolgt vorzugsweise dann, wenn die Ausgangsposition wieder erreicht ist. Alternativ ist es jedoch auch möglich, dass insbesondere bei einem langen Fahrzug ein Stoppen nach einer vorgegebenen Distanz erfolgt. Auch ist es möglich, dass das Rückgängigmachen beendet wird, sobald eine bestimmte Position des Fahrzeugs, zum Beispiel eine Änderung der Ausrichtung um ca. 90°, erreicht wurde. Auch ist es möglich, das Rückgängigmachen zu beenden, indem der Fahrer eine Aktion ausführt. Die Aktion des Fahrzeugs kann zum Beispiel das Anhalten des Fahrzeugs und ein anschließender Gangwechsel sein.

Insbesondere um eine Kollision mit einem Objekt zu vermeiden, das sich in dem zuvor zurückgelegten Bereich bewegt, ist es weiterhin möglich, bereits während des normalen Betriebs den bereits überfahrenen Bereich zu überwachen, um im Falle der Aktivierung für das Rückgängigmachen des letzten Fahrzuges schnellstmöglich entscheiden zu können, ob es möglich ist, den Fahrzug ohne eine Kollision rückgängig zu machen, oder ob nur ein Nothalt möglich ist.

Neben dem hier dargestellten Rückgängigmachen nur eines Fahrzuges ist es weiterhin auch möglich, insbesondere wenn beispielsweise ein Einparken in mehreren Zügen erfolgt ist, auch mehrere Fahrzüge nacheinander rückgängig zu machen. Dies ist zum Beispiel dann gegeben, wenn das Rückgängigmachen nicht eingesetzt wird, um eine Kollision zu vermeiden, sondern um das Fahrzeug beispielsweise von einem Parkplatz auszuparken.

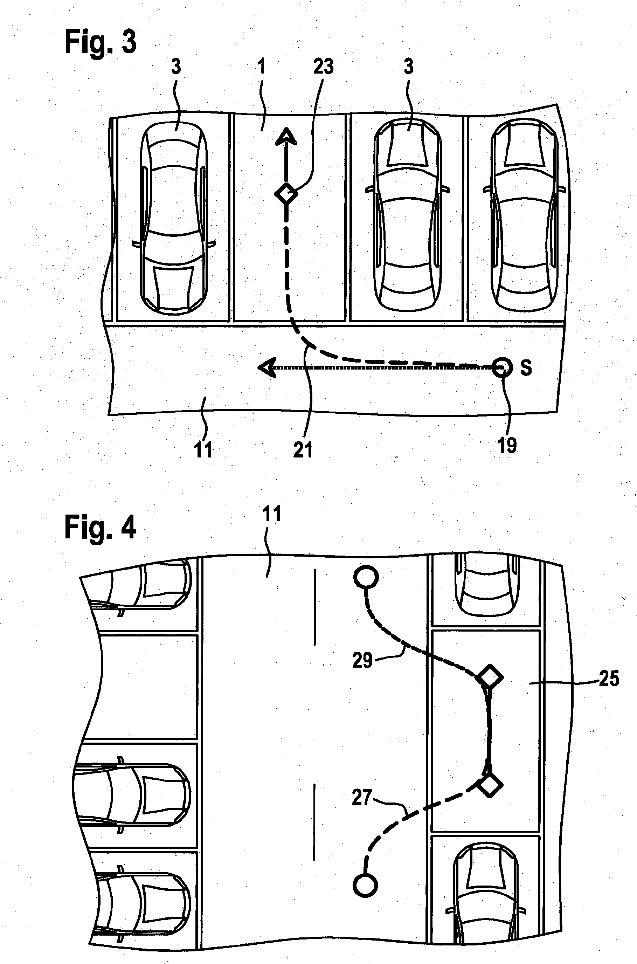

In Figur 3 ist ein Einparkmanöver in eine Längsparklücke dargestellt. Das Einparkmanöver in eine Längsparklücke unterscheidet sich vom Ausparkmanöver lediglich durch die Richtung, in der das Standardmanöver durchgeführt wird. Auch in der in Figur 3 dargestellten Ausführungsform ist der Querparkplatz 1 von Fahrzeugen 3 begrenzt. Ein Fahrzeug, das hier nicht dargestellt ist, nähert sich auf der Fahrbahn 11 dem Querparkplatz 1. Mit einem geeigneten Erfassungssystem kann erkannt werden, dass der Querparkplatz 1 frei ist und das Fahrzeug dort einparken kann. Alternativ ist es auch möglich, dass der Fahrer des Fahrzeugs feststellt, dass es sich um einen für das Einpacken des Fahrzeugs geeigneten Querparkplatz 1 handelt. Um das Fahrzeug auf den Querparkplatz 1 einzuparken, beginnt an einem Startpunkt 19 ein Standardmanöver zum Einparken des Fahrzeugs. Wenn das Fahrzeug vorwärts äuf den Querpackplatz 1 eingeparkt werden soll, so kann das Fahrzeug durch ein Rechtsabbiegen auf den Querparkplatz 1 fahren. Durch das Rechtsabbiegen erfolgt eine Richtungsänderung des Fahrzeugs um 90°. Das Rechtsabbiegen auf den Parkplatz erfolgt entlang einer Trajektorie 21. Diese beginnt am Startpunkt 19 und endet an einem Endpunkt 23, an dem das Fahrzeug seine Richtung um 90° geändert hat. Am Ende des Standardmanövers "Rechtsabbiegen", wie es in Figur 3 zum Einparken auf den Querparkplatz 1 genutzt wird, kann das Fahrzeug noch geradeaus weiterbewegt werden, um in die endgültige Endposition zu gelangen.

In Figur 4 sind Einparkmanöver auf einen Längsparkplatz dargestellt.

Im Unterschied zu einem Querparkplatz, wie er in den Figuren 1 bis 3 dargestellt ist, ist ein Längsparkplatz parallel zur Fahrbahn 11 ausgerichtet. Um auf einen Längsparkplatz 25 einzuparken, ist ein paralleles Verschieben der Ausrichtung des Fahrzeugs notwendig. Zunächst bewegt sich das Fahrzeug entlang der Fahrbahn 11. Der Längsparkplatz 25 ist parallel zur Fahrbahn ausgerichtet. Das Einparken auf den Längsparkplatz 25 kann entweder vorwärts entlang einer ersten Trajektorie 27 oder alternativ rückwärts entlang einer zweiten Trajektorie 29 erfolgen. Um das Fahrzeug anschließend wieder von dem Längsparkplatz 25 auszuparken, ist es dann möglich, den letzten Fahrzug rückgängig zu machen, d.h. das Befahren der ersten Trajektorie 27 oder der zweiten Trajektorie 29 in entgegengesetzte Richtung, bis das Fahrzeug wieder parallel zum Längsparkplatz 25 auf der Fahrbahn 11 steht. Das Fahrzeug kann dann nach dem Ausparken weiterfahren. Durch das Rückgängigmachen des zuletzt zurückgelegten Fahrmanövers wird auf diese Weise der Fahrer beim Ausparken von dem Längsparkplatz 25 unterstützt, ohne dass erneut eine geeignete Trajektorie berechnet werden muss. Ein schnelles Manöver ist somit möglich.

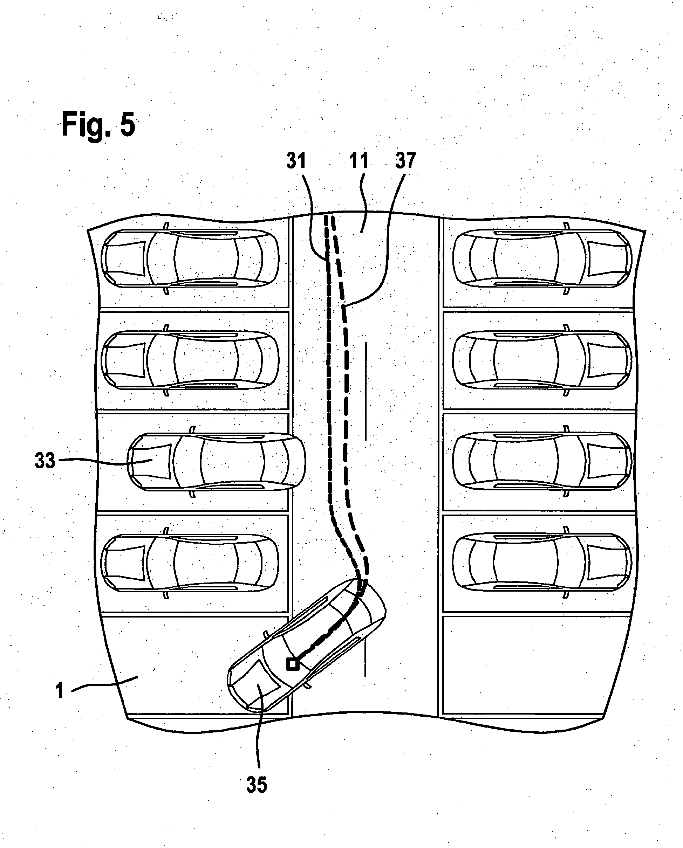

In Figur 5 ist ein Anpassen einer Trajektorie an eine veränderte Umgebung dargestellt. Ein Fahrzeug fährt zunächst entlang einer ersten Trajektorie 31 entlang der Fahrbahn 11 quer zu Querparkplätzen. Am Ende der Trajektorie 31 beginnt der Fahrer des Fahrzeugs auf einen Querparkplatz 1, der sich neben der Fahrbahn 11 befindet, einzuparken. Bei einem ungeschickten Rangiermanöver kann der letzte Fahrzug, den der Fahrer zurückgelegt hat, rückgängig gemacht werden. In diesem Fall würde das Fahrzeug erneut entlang der ersten Trajektorie 31 fahren. Wenn sich jedoch ein Fahrzeug, das zuvor auf einem Querparkplatz gestanden hat, bewegt, fährt dieses auf die Fahrbahn 11. Dies ist beispielhaft mit einem Fahrzeug 33 dargestellt. Das Fahrzeug 33 beginnt den Ausparkvorgang und fährt auf die Fahrbahn 11. Bei einer Fahrt entlang der ersten Trajektorie 31 würde dies dazu führen, dass das Fahrzeug 35, das den letzten Fahrzug rückgängig macht, mit dem ausparkenden Fahrzeug 33 kollidiert. Um eine Kollision zu vermeiden, ist es in diesem Falle zum Beispiel auch möglich, dass die zuvor zurückgelegte Trajektorie 31 parallel verschoben wird. Dies ist durch eine zweite Trajektorie 37 dargestellt. Die zweite Trajektorie 37 ist parallel zur ersten Trajektorie 31 verschoben, um so eine Kollision mit dem ausparkenden Fahrzeug 33 zu vermeiden. Diese Parallelverschiebung kann ebenfalls als Standardmanöver abgelegt sein.

Um das ausparkende Fahrzeug 33 zu erkennen, werden zum Beispiel die am Fahrzeug vorhandenen Abstandssensoren genutzt.

Um den Fahrzug rückgängig zu machen, wird - wie in Figur 5 dargestellt - zunächst die ursprüngliche Trajektorie genutzt. Anschließend wird aufgrund des erkannten ausparkenden Fahrzeugs 33 eine Anpassung vorgenommen, um die Kollision mit dem ausparkenden Fahrzeug 33 zu vermeiden. Ein weiterer Vorteil ist, dass durch die Änderung der Trajektorie auch das Einparken angepasst werden kann und zum Beispiel in einem nachfolgenden Rangierzug das Fahrzeug besser in die Querparklücke 1 einparken kann.

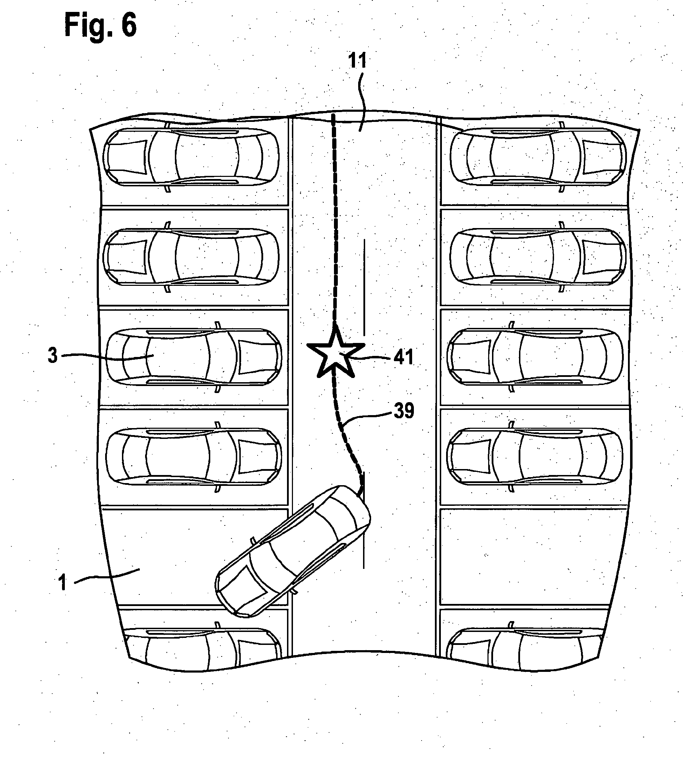

Ein Rückgängigmachen eines missglückten Rangierzuges ist beispielhaft in Figur 6 dargestellt. Bei dem in Figur 6 dargestellten Manöver fährt das Fahrzeug zunächst entlang der Fahrbahn 11 auf eine Querparklücke 1 zu. Beim Erkennen der Querparklücke 1 beginnt der Fahrer einen Einparkvorgang. Aufgrund des zu späten Startens des Einparkvorgangs ist es jedoch nicht möglich, das Fahrzeug in einem Zug in die Querparklücke 1 einzuparken, sondern der Fahrzug endet schräg zur Fahrtrichtung. Ein Weiterfahren ist nicht möglich, da sonst eine Kollision mit einem die Parklücke 1 begrenzenden Fahrzeug 3 droht. Um den Einparkvorgang zu wiederholten, ist es nun möglich, den letzten Fahrzug rückgängig zu machen. Das Rückgängigmachen erfolgt entlang der Trajektorie 39. Das Rückgängigmachen endet vorzugsweise an dem Punkt, an dem keine Richtungsänderung mehr erfolgt. Dieser ist durch einen Endpunkt 41 gekennzeichnet. Ab Erreichen des Endpunktes 41 kann dann erneut ein Einparkmanöver auf den Querparkplatz 1 gestartet werden.

Insbesondere kann bei der Rückgängigmachung eines missglückten Fahrversuches eine optimierte Trajektorie durch das zuvor überfahrene Feld gewählt werden. Von letzterem ist auch ohne Umfeldsensorik auszugehen, dass es nicht durch Objekte versperrt ist, womit das Rückgängigmachen im besten Fall durch einen Zug erfolgen könnte.

Bei den vom Fahrzeug durchgeführten Standardmanövern wird die Geschwindigkeit vom Fahrassistenzsystem geregelt. In einer bevorzugten Ausführungsform ist es jedoch möglich, dass der Fahrer die Geschwindigkeit durch Bremsen reduziert. Dies ist insbesondere dann vorteilhaft, wenn dem Fahrer, der den Rangiervorgang überwacht, die Geschwindigkeit des Fahrzeugs als zu hoch erscheint. Sollte der Fahrer zusätzlich Gas geben, so ist es zum Beispiel möglich, dass auf diesen Befehl nicht reagiert wird. Alternativ ist es auch möglich, beispielsweise eine Warnung auszugeben, den Vorgang abzubrechen und die Kontrolle wieder an den Fahrer zu übergeben.

Insbesondere beim Fahrmanöver "Rückgängigmachen des zuletzt zurückgelegten Fahrweges" ist es vorteilhaft, wenn sowohl die Längsführung als auch die Querführung vom Fahrassistenzsystem geregelt werden und dem Fahrer lediglich eine überwachende Funktion zukommt. Bei den Fahrmanövern "Linksabbiegen", "Rechtsabbiegen", "Wenden" und "parallel zu einem Objekt ausrichten" ist es auch möglich, dass dem Fahrer notwendige Lenkbewegungen angezeigt werden oder vom Fahrassistenzsystem die Lenkbewegung und damit die Querführung übernommen wird, jedoch die Längsführung des Fahrzeugs beim Fahrer verbleibt. In diesem Fall ist der Fahrer selbsttätig dafür verantwortlich, das Fahrzeug zum Beispiel zur Vermeidung einer Kollision rechtzeitig zum Stillstand zu bringen. Alternativ ist es auch möglich, dass die Längsführung zunächst beim Fahrer verbleibt, jedoch bei einer drohenden Kollision durch eine Eingabe des Fahrers automatisch das Rückgängigmachen des letzten Fahrzugs gestartet wird und in diesem Fall auch die Längsführung vom Fahrzeug übernommen wird.

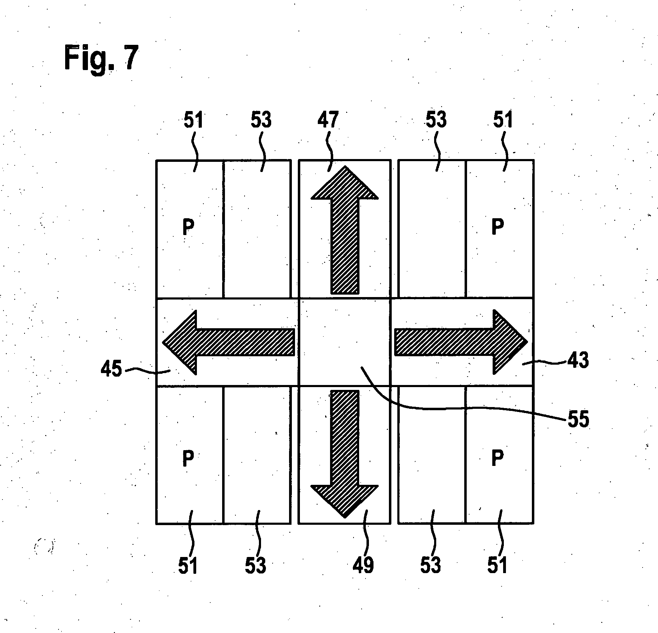

In Figur 7 ist beispielhaft ein Tastenfeld zur Auswahl eines Standardmanövers dargestellt.

Ein Tastenfeld kann zum Beispiel jeweils Tasten mit einem Pfeil aufweisen, wobei eine erste Taste 43 für ein Abbiegen nach rechts, eine zweite Taste 45 für ein Abbiegen nach links, eine dritte Taste 47 für eine Geradeaus-Fahrt, d.h. ein Fahren entlang einer Fahrbahnbegrenzung und eine vierte Taste 49 für eine Rückwärts-Fahrt oder ein Rückgängigmachen des letzten Fahrzuges vorgesehen ist. In einer einfachsten Ausführungsform umfasst das Tastenfeld zur Auswahl eines Standardmanövers lediglich diese vier Tasten.

Zusätzlich zu den Tasten 43, 45, 47, 49 zur Auswahl der Fahrtrichtung ist es auch möglich, Tasten zur Auswahl eines Parkwunsches 51 vorzusehen. In Abhängigkeit von der Position des gewünschten Parkplatzes kann dann die entsprechende Taste 51 für den Parkwunsch getätigt werden.

Neben den Parktasten 51 für den Parkwunsch können weiterhin Tasten 53 vorgesehen sein, bei deren Betätigung das Fahrzeug parallel zu einem Objekt ausgerichtet wird. In Abhängigkeit von der Position des Objektes, zu dem das Fahrzeug ausgerichtet werden soll, kann die entsprechende Taste 53 für paralleles Ausrichten betätigt werden.

In einer weiteren Ausgestaltung kann zusätzlich eine Taste 55 für ein Wendemanöver vorgesehen sein. Beim Betätigen der Taste 55 für das Wendemanöver wird eine Änderung der Ausrichtung des Fahrzeugs um 180° durchgeführt, wenn dies möglich ist.

Alternativ zu einem Tastenfeld, wie es zum Beispiel in Figur 7 dargestellt ist, ist jedoch auch jede andere Eingabe denkbar, mit der der Fahrer dem Fahrassistenzsystem das gewünschte Standardmanöver mitteilen kann. Wenn ein Tastenfeld vorgesehen ist, wie es beispielhaft in Figur 7 dargestellt ist, so kann dieses zum Beispiel am Lenkrad des Fahrzeugs oder verteilt über die Speichen des Lenkrades angeordnet sein. In diesem Fall kann der Fahrer auf einfache Weise die jeweiligen Tasten während des Führens des Fahrzeugs wählen.

Durch die Verwendung eines Tastenfelds, wie es beispielhaft in Figur 7 dargestellt ist, ist es so auf einfache Weise möglich, das jeweils gewünsche Standardmanöver zu wählen.

## Patentansprüche

1. Verfahren zur Unterstützung eines Fahrers eines Kraftfahrzeugs bei einem Fahrmanöver, bei dem entweder dem Fahrer von einem Fahrassistenzsystem Anweisungen zur Durchführung von notwendigen Lenkeinstellungen und zur Längsführung gegeben werden oder die Lenkeinstellungen und gegebenenfalls die Längsführung von dem Fahrassistenzsystem automatisch durchgeführt werden, wobei vom Fahrassistenzsystem Standardmanöver bereitgestellt werden, die bei einer möglichen Kollision mit einem Objekt (33) während der Durchführung eines vom Fahrassistenzsystem geplanten Fahrmanövers oder auf Anforderung durch den Fahrer durchgeführt werden,
**dadurch gekennzeichnet, dass** die Standardmanöver durch Algorithmen umgesetzt werden, die
a) in Abhängigkeit von erfassten Umfeldbedingungen adaptiv eine geeignete Trajektorie (5, 27, 29, 31, 37, 39) für die Ausführung des durch den Fahrer aktivierten beziehungsweise automatisch eingeleiteten Standardmanövers berechnen,
b) eine zuvor gefahrene Trajektorie (5, 27, 29, 31, 37, 39) in einem Speicher ablegen und weitere Umfeld- und Fahrzeuginformationen verwenden, um die abgespeicherte Trajektorie (5, 27, 29, 31, 37, 39) optimiert rückgängig zu machen (17),
wobei
die Geschwindigkeit, bei der ein Standardmanöver aktiviert werden kann,
von zur Umfelderfassung eingesetzten Sensoren und einem daraus resultierenden Sichtfeld des Fahrerassistenzsystems abhängt und maximal 30 km/h betragen darf.

2. Verfahren gemäß Anspruch 1, **dadurch gekennzeichnet, dass** die Standardmanöver Abbiegen, Ausrichten parallel zu einem Objekt (3), Wenden, Fahren entlang einer seitlich begrenzten Fahrbahn (11) und Rückgängigmachen (17) des zuletzt zurückgelegten Fahrweges sind.

3. Verfahren gemäß Anspruch 2, **dadurch gekennzeichnet, dass** der zuletzt vom Fahrassistenzsystem geplante und zurückgelegte Fahrweg einen oder mehrere Rangierzüge zum Einparken in eine Parklücke (1) umfasst.

4. Verfahren gemäß einem der Ansprüche 1 bis 3, **dadurch gekennzeichnet, dass** die Anforderung des Fahrers, ein Standardmanöver durchzuführen, dem Fahrassistenzsystem über ein Eingabeelement (43, 45, 47, 49, 51, 53, 55) gegeben wird.

5. Verfahren gemäß Anspruch 1, **dadurch gekennzeichnet, dass** zusätzlich zu den zur Umfelderfassung eingesetzten Sensoren weitere Lokalisierungswerkzeuge, insbesondere GPS-Informationen, verwendet werden, um eine Ausführung auf Fahrbahnen zu vermeiden, auf denen die Standardmanöver nicht durchgeführt werden sollen.

6. Verfahren gemäß einem der Ansprüche 1 bis 5, **dadurch gekennzeichnet, dass** während der Durchführung des Standardmanövers die Umgebung des Fahrzeugs mit Abstands- und gegebenenfalls Lokalisierungssensoren erfasst wird.

7. Verfahren gemäß einem der Ansprüche 1 bis 6, **dadurch gekennzeichnet, dass** das Fahrzeug bei Annäherung an ein Objekt (33) automatisch angehalten wird, wenn die Annäherung bei Fortsetzung des Standardmanövers zu einer Kollision mit dem Objekt (33) führen kann.

8. Verfahren gemäß Anspruch 1, **dadurch gekennzeichnet, dass** das Manöver, das bei einer möglichen Kollision mit einem Objekt (33) während der Durchführung eines vom Fahrassistenzsystem oder dem Fahrer frei geplanten Fahrmanövers durchgeführt wird, das Rückgängigmachen (17) des zuletzt zurückgelegten Fahrweges ist.

9. Verfahren gemäß einem der Ansprüche 2 bis 8, **dadurch gekennzeichnet, dass** die Ausführung eines Standardmanövers durch eine Aktion des Fahrers beendet werden kann.

10. Verfahren gemäß Anspruch 9, **dadurch gekennzeichnet, dass** die Aktion des Fahrers ein Anhalten des Fahrzeugs, gegebenenfalls einen Gangwechsel durch den Fahrer oder ein Orientierungswechsel der Richtungsanzeige umfasst.

11. Verfahren gemäß einem der Ansprüche 2 bis 8, **dadurch gekennzeichnet, dass** das vom Fahrassistenzsystem geplante und zurückgelegte Standardmanöver beendet wird, sobald das Fahrzeug eine vorgegebene maximale Distanz zurückgelegt hat, die Ausrichtung um einen vorgegebenen Winkel geändert hat, die ursprüngliche Ausrichtung vor Beginn des vom Fahrassistenzsystem geplanten Fahrmanövers wieder eingenommen wurde, sich das Umfeld geändert hat oder eine vorgegebene Zeit- oder Streckenvorgabe erreicht wurde.

12. Vorrichtung zur Durchführung des Verfahrens gemäß einem der Ansprüche 1 bis 11, umfassend Mittel zur Erfassung der Umgebung des Fahrzeugs sowie gegebenenfalls Mittel zur Lokalisierung des Fahrzeugs und ein Fahrassistenzsystem, um Anweisungen zur Durchführung der notwendigen Lenkeinstellungen und zur Längsführung an einen Fahrer des Fahrzeugs zu geben oder Lenkeinstellungen und gegebenenfalls die Längsführung des Fahrzeugs automatisch durchzuführen, **dadurch gekennzeichnet, dass** das Fahrassistenzsystem Mittel aufweist zum
a) Berechnen einer geeigneten Trajektorie (5, 27, 29, 31, 37, 39) in Abhängigkeit von erfassten Umfeldbedingungen für die Ausführung eines durch den Fahrer aktivierten beziehungsweise automatisch eingeleiteten Standardmanövers, oder
b) Optimiert rückgängig machen einer zuvor gefahrenen Trajektorie (5, 27, 29, 31, 37, 39), wobei weiterhin Mittel zur Speicherung vorgesehen sind, um eine zuvor gefahrene Trajektorie (5, 27, 29, 31, 37, 39) zu speichern
wobei
die Geschwindigkeit, bei der ein Standardmanöver aktiviert werden kann, von zur Umfelderfassung eingesetzten Sensoren und einem daraus resultierenden Sichtfeld des Fahrerassistenzsystems abhängt und maximal 30 km/h betragen darf.

13. Vorrichtung gemäß Anspruch 12, **dadurch gekennzeichnet, dass** ein Tastenfeld umfasst ist, bei dem jede Taste (43, 45, 47, 49, 51, 53, 55) mit einem bestimmten Standardmanöver verbunden ist.

## Claims

1. Method for assisting a driver of a motor vehicle during a driving manoeuvre, during which either instructions to carry out necessary steering settings and to perform longitudinal guidance are given to the driver by a driver assistance system or the steering settings and, if appropriate, the longitudinal guidance are carried out automatically by the driver assistance system, wherein the driver assistance system makes available standard manoeuvres which are carried out in the event of a possible collision with an object (33) during the execution of a driving manoeuvre planned by the driver assistance system or at the driver's request,
**characterized in that** the standard manoeuvres are implemented by means of algorithms which
a) calculate adaptively, as a function of sensed environmental conditions, a suitable trajectory (5, 27, 29, 31, 37, 39) for the execution of the standard manoeuvre which is activated by the driver or initiated automatically,
b) store a previously travelled-along trajectory (5, 27, 29, 31, 37, 39) in a memory and use further environmental information and vehicle information to reverse (17) the stored trajectory (5, 27, 29, 31, 37, 39) in an optimized fashion,
wherein
the speed at which a standard manoeuvre can be activated depends on sensors used for sensing the environment and a field of vision of the driver assistance system resulting therefrom and can be at maximum 30 km/h.

2. Method according to Claim 1, **characterized in that** the standard manoeuvres are making a turn, orienting the vehicle parallel to an object (3), turning around, driving along a laterally bounded underlying surface (11) and reversing (17) the driving path last travelled along.

3. Method according to Claim 2, **characterized in that** the driving path which was last planned and travelled along by the driver assistance system comprises one or more manoeuvres for parking in a parking space (1).

4. Method according to one of Claims 1 to 3, **characterized in that** the request of the driver to carry out a standard manoeuvre is given to the driver assistance system via an input element (43, 45, 47, 49, 51, 53, 55).

5. Method according to Claim 1, **characterized in that** in addition to the sensors used for sensing the environment, further localization tools, in particular GPS information, are used to avoid execution on underlying surfaces on which the standard manoeuvres are not to be carried out.

6. Method according to one of Claims 1 to 5, **characterized in that** during the execution of the standard manoeuvre the surroundings of the vehicle are sensed with distance sensors and, if appropriate, location-determining sensors.

7. Method according to one of Claims 1 to 6, **characterized in that** when the vehicle approaches an object (33) said vehicle is automatically stopped if the approach can lead to a collision with the object (33) given continuation of the standard manoeuvre.

8. Method according to Claim 1, **characterized in that** the manoeuvre which is carried out in the event of a possible collision with an object (33) during the execution of a driving manoeuvre which is freely planned by the driver assistance system or the driver is the reversal (17) of the driving path last travelled along.

9. Method according to one of Claims 2 to 8, **characterized in that** the execution of a standard manoeuvre can be ended by an action of the driver.

10. Method according to Claim 9, **characterized in that** the action of the driver comprises stopping the vehicle, if appropriate a change of gear by the driver or a change of orientation of the direction indicator.

11. Method according to one of Claims 2 to 8, **characterized in that** the standard manoeuvre which is planned and travelled along by the driver assistance system is ended as soon as the vehicle has travelled along a predefined maximum distance, the orientation has changed by a predefined angle, the original orientation has been assumed again before the start of the driving manouevre planned by the driving assistance system, the environment has changed or a predefined time setting or distance setting has been reached.

12. Device for carrying out the method according to one of Claims 1 to 11, comprising means for sensing the surroundings of the vehicle and, if appropriate, means for determining the location of the vehicle and a driver assistance system in order to give instructions for the execution of the necessary steering settings and for performance of longitudinal guidance to a driver of the vehicle or to implement steering settings and, if appropriate, perform the longitudinal guidance of the vehicle automatically, **characterized in that** the driver assistance system has means for
a) calculating a suitable trajectory (5, 27, 29, 31, 37, 39) as a function of sensed environmental conditions for the execution of a standard manoeuvre which is activated by the driver or initiated automatically, or
b) reversing in an optimized fashion a previously travelled trajectory (5, 27, 29, 31, 37, 39), wherein storage means are also provided in order to store a previously travelled-along trajectory (5, 27, 29, 31, 37, 39), wherein the speed at which a standard manoeuvre can be activated depends on sensors which are used for sensing the environment and a field of vision of the driver assistance system resulting therefrom, and can be at maximum 30 km/h.

13. Device according to Claim 12, **characterized in that** a keypad is included, in which each key (43, 45, 47, 49, 51, 53, 55) is connected to a specific standard manoeuvre.

## Revendications

1. Procédé destiné à l'assistance d'un conducteur d'un véhicule automobile lors d'une manoeuvre de conduite, selon lequel des instructions destinées à l'exécution des réglages nécessaires de la direction et destinées au guidage longitudinal sont délivrées au conducteur par un système d'assistance à la conduite, ou alors les réglages de la direction et éventuellement le guidage longitudinal sont exécutés automatiquement par le système d'assistance à la conduite, des manoeuvres standard étant mises à disposition par le système d'assistance à la conduite, lesquelles sont exécutées dans le cas d'une collision possible avec un objet (33) pendant l'exécution d'une manoeuvre de conduite planifiée par le système d'assistance à la conduite ou sur ordre du conducteur,
**caractérisé en ce que** les manoeuvres standard sont mises en oeuvre par des algorithmes qui
a) calculent de manière adaptative, en fonction des conditions environnantes détectées, une trajectoire appropriée (5, 27, 29, 31, 37, 39) pour l'exécution de la manoeuvre standard activée par le conducteur ou induite automatiquement,
b) enregistrent dans une mémoire une trajectoire (5, 27, 29, 31, 37, 39) parcourue précédemment et utilisent des informations d'environnement et de véhicule supplémentaires pour annuler (17) de manière optimale la trajectoire (5, 27, 29, 31, 37, 39) mise en mémoire, la vitesse à laquelle une manoeuvre standard peut être activée dépendant des capteurs utilisés pour la détection de l'environnement et d'un champ visuel qui en résulte du système d'assistance à la conduite et ne devant pas excéder 30 km/h.

2. Procédé selon la revendication 1, **caractérisé en ce que** les manoeuvres standard sont le virage, l'alignement en parallèle à un objet (3), le demi-tour, la conduite le long d'une voie de circulation (11) délimitée latéralement et l'annulation (17) de la dernière trajectoire parcourue.

3. Procédé selon la revendication 2, **caractérisé en ce que** la dernière trajectoire planifiée par le système d'assistance à la conduite et parcourue comprend une ou plusieurs séries de manoeuvres destinées à l'entrée en stationnement dans un emplacement de stationnement (1).

4. Procédé selon l'une des revendications 1 à 3, **caractérisé en ce que** l'ordre du conducteur d'exécuter une manoeuvre standard est donné au système d'assistance à la conduite par le biais d'un élément de saisie (43, 45, 47, 49, 51, 53, 55).

5. Procédé selon la revendication 1, **caractérisé en ce que** des outils de localisation supplémentaires, notamment des informations de GPS, sont utilisés en plus des capteurs utilisés pour la détection de l'environnement afin d'éviter une exécution sur les voies de circulation sur lesquelles les manoeuvres standard ne doivent pas être exécutées.

6. Procédé selon l'une des revendications 1 à 5, **caractérisé en ce que** pendant l'exécution de la manoeuvre standard, l'environnement du véhicule est détecté avec des capteurs de distance et éventuellement de localisation.

7. Procédé selon l'une des revendications 1 à 6, **caractérisé en ce que** lors de l'approche d'un objet (33), le véhicule est automatiquement immobilisé si l'approche peut donner lieu à une collision avec l'objet (33) en cas de poursuite de la manoeuvre standard.

8. Procédé selon la revendication 1, **caractérisé en ce que** la manoeuvre d'annulation (17) de la dernière trajectoire parcourue est exécutée dans le cas d'une collision possible avec un objet (33) pendant l'exécution d'une manoeuvre de conduite planifiée librement par le système d'assistance à la conduite ou le conducteur.

9. Procédé selon l'une des revendications 2 à 8, **caractérisé en ce que** l'exécution d'une manoeuvre standard peut être terminée par une action du conducteur.

10. Procédé selon la revendication 9, **caractérisé en ce que** l'action du conducteur comprend une immobilisation du véhicule, éventuellement un changement de rapport par le conducteur ou un changement d'orientation de l'indicateur de direction.

11. Procédé selon l'une des revendications 2 à 8, **caractérisé en ce que** la manoeuvre standard planifiée et accomplie par le système d'assistance à la conduite est terminée dès que le véhicule a parcouru une distance maximale prédéfinie, l'orientation s'est modifiée d'un angle prédéfini, l'orientation initiale avant le début de la manoeuvre de conduite planifiée par le système d'assistance à la conduite a de nouveau été adoptée, l'environnement a changé ou une consigne de temps ou de trajet prédéfinie a été atteinte.

12. Dispositif destinée à mettre en oeuvre le procédé selon l'une des revendications 1 à 11, comprenant des moyens servant à détecter l'environnement du véhicule et éventuellement des moyens servant à la localisation du véhicule et un système d'assistance à la conduite, afin de délivrer à un conducteur du véhicule des instructions pour l'exécution des réglages nécessaires de la direction et de guidage longitudinal ou d'exécuter automatiquement les réglages de la direction et éventuellement le guidage longitudinal du véhicule, **caractérisé en ce que** le système d'assistance à la conduite présente des moyens pour
a) calculer une trajectoire appropriée (5, 27, 29, 31, 37, 39) en fonction des conditions environnantes détectées pour l'exécution d'une manoeuvre standard activée par le conducteur ou induite automatiquement, ou
b) annuler de manière optimale une trajectoire (5, 27, 29, 31, 37, 39) parcourue précédemment, des moyens de mise en mémoire étant en outre prévus pour mettre en mémoire une trajectoire (5, 27, 29, 31, 37, 39) parcourue précédemment,
la vitesse à laquelle une manoeuvre standard peut être activée dépendant des capteurs utilisés pour la détection de l'environnement et d'un champ visuel qui en résulte du système d'assistance à la conduite et ne devant pas excéder 30 km/h.

13. Dispositif selon la revendication 12, **caractérisé en ce qu'**un clavier est inclus, sur lequel chaque touche (43, 45, 47, 49, 51, 53, 55) est liée à une manoeuvre standard définie.
